(19) **Europäisches Patentamt**
**European Patent Office**
**Office européen des brevets**

(11) **EP 2 192 762 A2**

(12) **EUROPÄISCHE PATENTANMELDUNG**

(43) Veröffentlichungstag:
02.06.2010 Patentblatt 2010/22

(51) Int Cl.:
*H04N 5/217* (2006.01)  *H04N 5/335* (2006.01)

(21) Anmeldenummer: 09014149.0

(22) Anmeldetag: 12.11.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
AL BA RS

(30) Priorität: 01.12.2008 DE 102008059818

(71) Anmelder: Diehl BGT Defence GmbH & Co.KG
88662 Überlingen (DE)

(72) Erfinder:
• Baumgart, Jörg, Prof., Dr.
88634 Herdwangen-Schönach (DE)

• Uihlein, Christoph, Dr.
88662 Überlingen (DE)
• Löbau, Jörg, Dr.
88633 Heiligenberg (DE)
• Rappold, Winfried, Dr.
88718 Daisendorf (DE)

(74) Vertreter: Diehl Patentabteilung
c/o Diehl Stiftung & Co. KG
Stephanstrasse 49
90478 Nürnberg (DE)

(54) **Verfahren zur Reduktion des Übersprechens bei einem Sensorsystem mit mehreren Gesichtsfeldern**

(57) Die Erfindung geht aus von einem Sensorsystem mit mehreren Gesichtsfeldern und einer Abbildungsvorrichtung, die mehrere Gesichtsfelder überlagert auf einem Detektor abbildet.

Zur Reduktion des Übersprechens in diesen Sensorsystemen wird vorgeschlagen, für wenigstens einen einzelnen Detektorbildpunkt (20b) eines ersten Gesichtsfeldes (2) Überspruchfaktoren ($c_{ij}$) zu bestimmen (50), welche jeweils angeben, in welchem Maße die entsprechenden Detektorbildpunkte (20a, 20c, 20d) der übrigen Gesichtsfelder (1, 3, 4) in den wenigstens einen einzelnen Detektorbildpunkt (20b) des ersten Gesichtsfelds (2) übersprechen, aus den Überspruchfaktoren ($c_{ij}$) Korrekturfaktoren zu bestimmen (52) und einen in dem wenigstens einen einzelnen Detektorbildpunkt (20b) des ersten Gesichtsfelds (1) gemessenen Grauwert mit Hilfe der Korrekturfaktoren zumindest teilweise um in dem gemessenen Grauwert enthaltene Grauwertanteile zu korrigieren (54), welche durch Übersprechen aus den entsprechenden Detektorbildpunkten (20a, 20c, 20d) der übrigen Gesichtsfelder (1, 3, 4) in den gemessenen Grauwert eingetragen werden.

Fig. 5

EP 2 192 762 A2

**Beschreibung**

Die Erfindung geht aus von einem Sensorsystem mit mehreren Gesichtsfeldern und einer Abbildungsvorrichtung, die mehrere Gesichtsfelder überlagert auf einem Detektor abbildet.

Die Motivation für eine Verwendung solcher Systeme besteht in dem Wunsch, mehrere Gesichtsfelder oder ein möglichst großes Gesichtsfeld hinreichend detailliert zu erfassen, gleichzeitig die Vorrichtung jedoch möglichst aufwandsgünstig, leicht und wenig anfällig zu halten. Um ein größeres Gesichtsfeld hinreichend detailliert zu erfassen, wird häufig ein Detektor mit erhöhter Auflösung eingesetzt, sodass ein größeres Gesichtsfeld ohne eine Verringerung der Auflösung erfasst und aufgezeichnet werden kann. Diese Vorgehensweise ist beispielsweise bei Kameras verbreitet. Bei entsprechender Aufteilung des Detektorbereichs können mit solch einem hoch auflösenden Detektor offensichtlich auch mehrere Gesichtsfelder gleichzeitig erfasst werden, indem jedem Gesichtsfeld ein bestimmter Bereich des Detektors zugeordnet wird. Sofern überhaupt ein Detektor mit hinreichend großer Auflösung für den jeweiligen Anwendungsfall zur Verfügung steht, ist eine sehr hohe Auflösung häufig mit Nachteilen in anderen Detektoreigenschaften, beispielsweise dessen Empfindlichkeit oder seinem Rauschverhalten, verbunden. Überdies zeichnen sich besonders hoch auflösende Detektoren üblicherweise durch einen hohen Kostenaufwand aus.

Aus den genannten Gründen werden alternative Ansätze zur Erfassung mehrerer oder größerer Gesichtsfelder verfolgt. Ein alternativer Ansatz besteht darin, mehrere Gesichtsfelder überlagert auf denselben Detektor abzubilden. Aus dieser überlagerten Abbildung kann sodann ein einzelnes Gesichtsfeld isoliert werden, indem die übrigen Gesichtsfelder mittels der Abbildungsvorrichtung temporär gedämpft werden. Die einfallende elektromagnetische Strahlung dieser übrigen Gesichtsfelder wird also in der Abbildungsvorrichtung temporär absorbiert, gestreut, blockiert oder anderweitig zurückgehalten, sodass im Idealfall in diesem Moment keine Strahlungsanteile aus diesen Gesichtsfeldern den Detektor erreichen. Dieser alternative Ansatz kann auch Verwendung finden, wenn ein Gesichtsfeld gewünscht ist, dessen Format nicht mit dem Detektorformat übereinstimmt; z. B. wenn einen Aufnahme im Panoramaformat 5:1 mittels eines Detektors realisiert werden soll, der ein Format 4:3 aufweist.

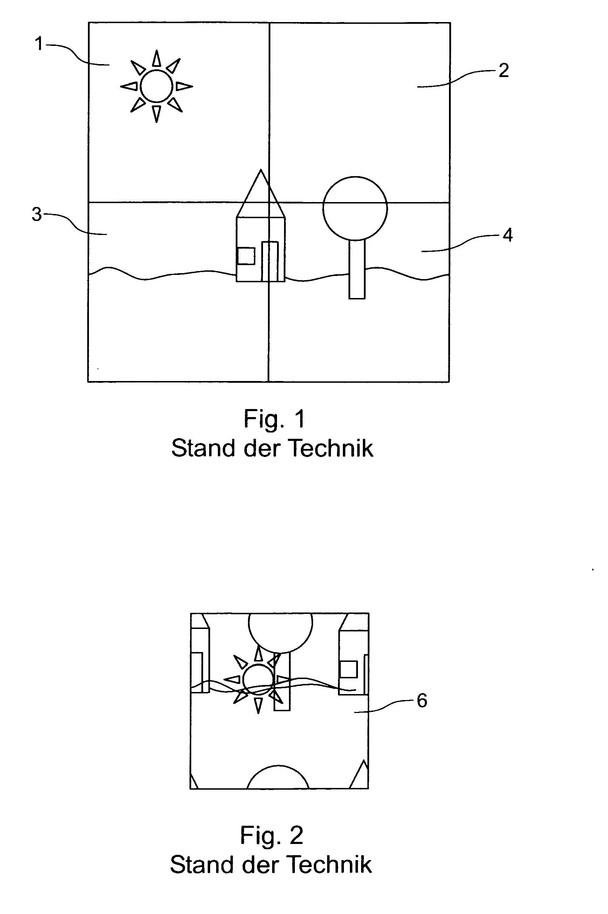

In der Praxis lässt sich aufgrund von Nichtidealitäten in der Abbildungsvorrichtung jedoch nicht gewährleisten, dass die elektromagnetische Strahlung der übrigen Gesichtsfelder vollständig eliminiert wird. Aufgrund von Beugungs-, Streu- oder anderen Effekten erreichen stets Strahlungsanteile der übrigen Gesichtsfelder weiterhin den Detektor. Dies wird als Übersprechen von Bildanteilen der anderen Gesichtsfelder in das gegenwärtig mit dem Detektor betrachtete Gesichtsfeld bezeichnet. Infolge dieses Übersprechens kann es bei hinreichender Intensität eines übersprechenden Signals dazu kommen, dass bei der Auswertung der Detektorsignale für ein Gesichtsfeld Bildanteile aus einem anderen Gesichtsfeld erkennbar sind. Die Figuren 1 bis 3 illustrieren diesen Sachverhalt.

Figur 1 zeigt vier Gesichtsfelder 1, 2, 3, 4, die in diesem Beispiel durch aneinander angrenzende, disjunkte Quadranten gebildet sind. Grundsätzlich ist jedoch ein Angrenzen der Gesichtsfelder nicht erforderlich, auch können sich einzelne Gesichtfelder überlappen. Diese vier Gesichtsfelder 1, 2, 3, 4 werden mittels einer Abbildungsvorrichtung überlagert auf einem Detektor abgebildet. Dies illustriert schematisch Figur 2, in welcher die auf dem Detektor überlagerten Gesichtsfelder 6 erkennbar sind. Ein Sensorsystem samt Abbildungsvorrichtung, mittels welchem eine derartige Überlagerung realisiert werden kann, ist beispielsweise in EP 0 905 539 B1 beschrieben.

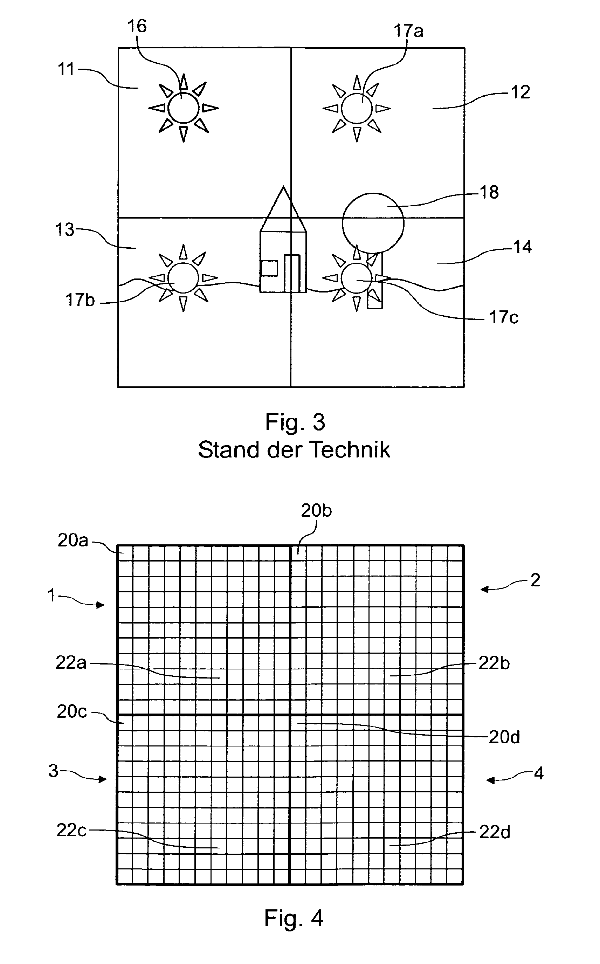

Durch die oben beschriebene temporäre Dämpfung der Bildanteile einzelner Gesichtsfelder lassen sich die Signale der unterschiedlichen Gesichtsfelder trennen. Im Ergebnis erhält man vier Einzelbilder 11, 12, 13, 14, die in Figur 3 der besseren Vergleichbarkeit halber in derselben Anordnung dargestellt sind wie die Originalobjekte in den Gesichtsfeldern 1 bis 4 in Figur 1. Wie Figur 3 entnehmbar ist, gibt das Einzelbild 11 den Bildausschnitt des Gesichtsfeldes 1 korrekt wieder. In den übrigen Einzelbildern 12, 13, 14 ist hingegen ein so genanntes Übersprechen 17a, 17b, 17c der Sonne 16 aus dem Gesichtsfeld 1 erkennbar. In diesem Beispiel war also die Strahlungsintensität der Sonne 16 so groß, dass die entsprechenden Detektorsignale erkennbar in die Bilder der übrigen Gesichtsfelder 2, 3, 4 übersprechen und dort das Übersprechen 17a, 17b, 17c erzeugen aufgrund von Nichtidealitäten in der Abbildungsvorrichtung. Zwar übersprechen auch die übrigen Objekte, beispielsweise eine Baumkrone 18 aus dem Gesichtsfeld 2, in die übrigen Teilbilder, doch ist deren Intensität so gering, dass dies zunächst nicht erkennbar ist.

Vor dem Hintergrund dieser Problematik liegt der vorliegenden Erfindung die Aufgabe zugrunde, ein Verfahren zur Verfügung zu stellen, mit welchem ein Übersprechen bei Sensorsystemen der eingangs beschriebenen Art korrigiert werden kann.

Diese Aufgabe wird gelöst durch ein Verfahren, bei welchem für wenigstens einen einzelnen Detektorbildpunkt, häufig auch als Pixel bezeichnet, eines ersten Gesichtsfeldes Überspruchfaktoren bestimmt werden, welche jeweils angeben, in welchem Maße die entsprechenden Detektorbildpunkte der übrigen Gesichtsfelder in den wenigstens einen einzelnen Detektorbildpunkt des ersten Gesichtsfeldes übersprechen. Aus den Überspruchfaktoren werden im Weiteren Korrekturfaktoren bestimmt. In dem wenigstens einen einzelnen Detektorbildpunkt gemessene Grauwerte werden sodann mithilfe der Korrekturfaktoren zumindest teilweise um solche in dem gemessenen Grauwert enthaltene Grauwertanteile korrigiert, welche durch Übersprechen aus den entsprechenden Detektorbildpunkten der übrigen Gesichtsfelder in die gemessenen Grauwerte eingetragen werden.

Unter dem ersten Gesichtsfeld ist dabei offensichtlich nicht das Gesichtsfeld 1 aus Figur 3 zu verstehen. Stattdessen kann grundsätzlich jedes Gesichtsfeld das erste Gesichtfeld im Sinne der vorliegenden Erfindung sein. Soll für einen bestimmten Detektorbildpunkt eines bestimmten Gesichtsfelds eine Korrektur bzw. Reduktion des Übersprechens durchgeführt werden, so ist dieses bestimmte Gesichtsfeld das erste Gesichtsfeld. Soll zudem für einen Detektorbildpunkt eines anderen Gesichtsfeldes eine Korrektur bzw. Reduktion des Übersprechens mit dem erfindungsgemäßen Verfahren realisiert werden, so ist für die Korrektur des Detektorbildpunktes des anderen Gesichtsfelds dieses andere Gesichtsfeld das erste Gesichtsfeld. Die Tatsache, dass zuvor ein anderes Gesichtsfeld das erste Gesichtsfeld darstellte, steht dem nicht entgegen.

Weiterhin sind unter dem Begriff entsprechende Detektorbildpunkte diejenigen Detektorbildpunkte der verschiedenen Gesichtsfelder zu verstehen, welche von derselben Abbildungseinheit des Detektors aufgenommen wurden. Dies illustriert Figur 4, in welcher für vier verschiedene Gesichtsfelder 1, 2, 3, 4 entsprechende Detektorbildpunkte mit Bezugszeichen versehen sind. So entsprechen die Detektorbildpunkte 20a, 20b, 20c und 20d einander, da sie von derselben Abbildungseinheit des Detektors, d. h. demselben Bildpixel des Detektors, aufgezeichnet wurden. In gleicher Weise entsprechen die Detektorbildpunkte 22a, 22b, 22c und 22d einander.

Unter der Messung eines Grauwerts ist vorliegend die Messung der Strahlungsintensität in dem wenigstens einen einzelnen Detektorbildpunkt zu verstehen. In diesem wird gleichsam ein Graustufenbild aufgenommen. In welchem Frequenz- bzw. Wellenlängenbereich das Sensorsystem arbeitet, kann durch die Charakteristik des verwendeten Detektors bestimmt werden. Beispielsweise sind Messungen im Infrarotbereich oder im sichtbaren Bereich möglich. Trotz der Messung eines Grauwertes in dem wenigstens einen einzelnen Detektorbildpunkt kann das erfindungsgemäße Verfahren auch in Farbsensorsystemen Verwendung finden. Beispielsweise können hierzu Farbfilter eingesetzt werden oder, wie bei digitaler Farbfotographie üblich, zusätzlich zu Grauwerte messenden Detektorbildpunkten farbsensitive Detektorbildpunkte vorgesehen werden.

In einem bevorzugten Ausführungsbeispiel werden die gemessenen Grauwerte jedes einzelnen Detektorbildpunktes aller Gesichtsfelder unter Verwendung der Korrekturfaktoren korrigiert. Hierdurch sind für jedes Gesichtsfeld Abbildungen erhältlich, in welchen das Übersprechen weitgehend reduziert ist. Für einzelne Detektorbildpunkte ermittelte Überspruch- und Korrekturfaktoren können dabei vereinfachend für die Korrektur weiterer, insbesondere benachbarter, Detektorbildpunkte verwendet werden.

Eine bevorzugte Ausführungsvariante der Erfindung sieht vor, dass das für jeden einzelnen Detektorbildpunkt aller Gesichtsfelder die Überspruchfaktoren bestimmt werden. Dies ermöglicht eine besonders effiziente Reduktion des Übersprechens in dem gesamten Bild jedes Gesichtsfeldes.

Bei einer Weiterbildung des erfindungsgemäßen Verfahrens werden die Überspruchfaktoren für den wenigstens einen einzelnen Detektorbildpunkt des ersten Gesichtsfeldes bestimmt, indem die entsprechenden Detektorbildpunkte der übrigen Gesichtfelder mit Referenzsignalen belegt werden und der Einfluss jedes Referenzsignals auf den in dem einzelnen Detektorbildpunkt des ersten Gesichtsfelds gemessenen Grauwert bestimmt wird. Auf diese Weise können die Überspruchfaktoren und im Weiteren die Korrekturfaktoren vergleichsweise einfach bestimmt werden.

In einer bevorzugten Ausführungsvariante der Erfindung werden zur Bestimmung der Überspruchfaktoren für den wenigstens einen einzelnen Detektorbildpunkt des ersten Gesichtsfelds der entsprechende Detektorbildpunkt eines weiteren Gesichtsfelds mit einem vom Null verschiedenen Referenzsignal belegt, während die entsprechenden Detektorbildpunkte der übrigen weiteren Gesichtsfelder und der eine einzelne Detektorbildpunkt des ersten Gesichtsfeldes mit einem Null-Referenzsignal belegt werden. Im Weiteren wird, wie im voranstehenden Absatz beschrieben, der Einfluss dieser Referenzsignalkombination auf den in dem einzelnen Detektorbildpunkt des ersten Gesichtsfeldes gemessenen Grauwert bestimmt. Im Weiteren wird die beschriebene Referenzsignalbelegung unter den weiteren Gesichtsfeldern derart durchgewechselt, dass der dem einzelnen Detektorbildpunkt des ersten Gesichtsfelds entsprechende Detektorbildpunkt jedes weiteren Gesichtsfeldes zumindest einmal mit dem von Null verschiedenen Referenzsignal belegt wird. Dies ermöglicht eine Bestimmung der Überspruch- und Korrekturfaktoren mit verringertem Aufwand.

In einer besonders bevorzugten Ausgestaltungsvariante der Erfindung wird der Bestimmung der Überspruchfaktoren ein linearer Zusammenhang zwischen den in dem wenigstens einen einzelnen Detektorbildpunkt des ersten Gesichtsfelds gemessenen Grauwert und den Referenzsignalen in den entsprechenden Detektorbildpunkten der übrigen Gesichtsfelder zugrunde gelegt. Dies ermöglicht eine hinreichende Reduktion des Übersprechens bei möglichst geringem Aufwand für die Bestimmung der Überspruchs- und Korrekturfaktoren sowie bei der Korrektur der gemessenen Grauwerte. Grundsätzlich kann auch ein Zusammenhang höherer Ordnung zwischen den gemessenen Grauwerten und den Referenzsignalen angenommen werden, doch erhöht dies die Anzahl der erforderlichen Kalibriermessung zur Bestimmung der Überspruchfaktoren und weiterhin den rechnerischen Aufwand zur Korrektur später gemessener Grauwerte.

Sind mehrere Gesichtsfelder vorhanden und sollen für alle einem einzelnen Detektorbildpunkt eines ersten Gesichtsfeldes entsprechenden Detektorbildpunkte dieser Gesichtsfelder sowie für den einzelnen Detektorbildpunkt des ersten Gesichtsfeldes die Überspruchfaktoren bestimmt werden, so sind diese im Falle der oben beschriebenen Bestimmung der Überspruchsfaktoren mittels Verwendung eines von Null verschiedenen Referenzsignales und des Null-Referenzsignales unter Voraussetzung des beschriebenen linearen Zusammenhanges anhand von einer der Anzahl der Gesichtsfelder entsprechenden Zahl von Messungen bestimmbar. Nach Bestimmung der Korrekturfaktoren wäre der korrigierte Grauwert jeweils durch eine der Anzahl der Gesichtsfelder entsprechenden Zahl von Multiplikationen und eine der Anzahl der Gesichtsfelder entsprechenden Zahl von Additionen bestimmbar.

Allerdings sind die in der Praxis eingesetzten Sensorsysteme nicht ideal, beispielsweise nicht hinreichend gegen Umgebungseinflüsse wie Wärmestrahlung im Falle eines Infrarotsensorsystems isoliert. Die gemessenen Grauwerte sind daher mit einem systematischen Signalversatz, häufig als Offset bezeichnet, behaftet. Eine Weiterbildung des erfindungsgemäßen Verfahrens sieht daher vor, dass der systematische Signalversatz des Sensorsystems in den Überspruchfaktoren berücksichtigt wird und über die Korrekturfaktoren korrigiert wird.

Dies kann erfolgen durch Kalibrierung des Übersprechens bei verschiedenen Kalibriersignalen und anschließende Eliminierung systematischer Signalversatzanteile durch Bildung der Differenz zweier Kalibriermessungen. Eine Weiterbildung des erfindungsgemäßen Verfahrens sieht daher vor, dass zur Bestimmung der Überspruchfaktoren für den wenigstens einen einzelnen Detektorbildpunkt des ersten Gesichtsfelds der entsprechende Detektorbildpunkt eines weiteren Gesichtsfelds während einer ersten Zeitphase mit einem ersten Referenzsignal und während einer zweiten Zeitphase mit einem zweiten, von dem ersten Referenzsignal unterschiedlichen Referenzsignal belegt wird. Die entsprechenden Detektorbildpunkte der übrigen weiteren Gesichtsfelder und der eine einzelne Detektorbildpunkt des ersten Gesichtsfeldes werden während beider Zeitphasen mit einem jeweiligen Basisreferenzsignal belegt, wobei bevorzugt für jedes weitere Gesichtfeld dasselbe Basisreferenzsignal verwendet wird. Die beschriebene Referenzsignalbelegung wird sodann unter den weiteren Gesichtsfeldern derart durchgewechselt, dass der dem einzelnen Detektorbildpunkt des ersten Gesichtsfelds entsprechende Detektorbildpunkt jedes weiteren Gesichtsfelds zumindest einmal mit dem ersten und zumindest einmal mit dem zweiten Referenzsignal belegt wird. Das erste Referenzsignal kann dabei für jedes Gesichtsfeld unterschiedlich sein, das zweite Referenzsignal ebenso. Bevorzugt wird jedoch für jedes Gesichtsfeld das gleiche erste und das gleiche zweite Referenzsignal verwendet, um den Aufwand für die Kalibriermessungen zu verringern. Auch das Basisreferenzsignal kann grundsätzlich variieren, solange es während zu einander gehörigen ersten und zweiten Zeitphasen im jeweiligen entsprechenden Detektorbildpunkt dasselbe ist.

Setzt man wiederum einen linearen Zusammenhang zwischen den gemessenen Grauwerten und den Referenzsignalen voraus und geht davon aus, dass für alle einem einzelnen Detektorbildpunkt eines ersten Gesichtsfeldes entsprechende Detektorbildpunkte sowie für den einzelnen Detektorbildpunkt selbst die Überspruchfaktoren zu bestimmen sind, so sind mit diesem Verfahren doppelt so viele Kalibriermessungen wie Gesichtsfelder vorhanden sind erforderlich, um unter Berücksichtigung des systematischen Signalversatzes des Sensorsystems die gewünschten Überspruchfaktoren zu bestimmen.

Eine vorteilhafte Ausgestaltungsvariante der Erfindung sieht zum Zwecke der Reduktion der erforderlichen Kalibriermessungen vor, dass für jedes Gesichtsfeld dasselbe, einheitliche Basisreferenzsignal verwendet wird und für alle Gesichtsfelder ein einheitliches erstes Referenzsignal verwendet wird, welches dem Basisreferenzsignal entspricht. Derartige Messungen ermöglichen die Bestimmung der Überspruchfaktoren anhand einer verringerten Anzahl von Kalibriermessungen. Setzt man wiederum den beschriebenen linearen Zusammenhang voraus und geht davon aus, dass für alle einem einzelnen Detektorbildpunkt eines ersten Gesichtsfeldes entsprechende Detektorbildpunkte sowie für den einzelnen Detektorbildpunkt selbst die Überspruchfaktoren zu bestimmen sind, so wird für die Bestimmung der gewünschten Überspruchfaktoren eine Anzahl von Kalibriermessungen benötigt, welche um eins größer ist als die Zahl der Gesichtsfelder. Soll jeder Detektorbildpunkt eines Gesichtsfeldes korrigiert werden, so ist diese Anzahl der Messungen mit der Pixelanzahl des Detektors zu multiplizieren, da die genannte Anzahl von Messungen für jeden Satz einander entsprechender Detektorbildpunkte durchzuführen ist. Für in der Praxis eingesetzte Detektoren ergibt sich somit eine vergleichsweise große Anzahl an Kalibriermessungen, die jedoch nur einmalig durchzuführen sind zur Bestimmung der Überspruchs- bzw. Korrekturfaktoren. Die bestimmten Korrekturfaktoren werden sodann in allen Ausgestaltungsvarianten der Erfindung vorteilhafterweise abgespeichert, sodass sie für eine beliebige Anzahl von Korrekturen sofort zur Verfügung stehen. Jeder in einem einzelnen Detektorbildpunkt gemessene Grauwert eines Gesichtsfeldes kann mit einer der Anzahl der Gesichtsfelder entsprechenden Zahl von Multiplikationen und einer der Anzahl der Gesichtsfelder entsprechenden Zahl von Additionen (s. o.) korrigiert werden. Trotz der gegebenenfalls hohen Anzahl von Pixeln des Detektors und großer Anzahl an Gesichtsfeldern ist dies für heute zur Verfügung stehende Rechnersysteme ein geringer Rechenaufwand, der sehr schnell abarbeitbar ist.

Bekanntermaßen lässt sich die Genauigkeit eines Messergebnisses durch mehrfaches Durchführen der Messung und Mittelung der Messresultate erhöhen. Dementsprechend können die einzelnen Kalibriermessungen mehrfach durchgeführt und das gemittelte Ergebnis der Bestimmung der Überspruchfaktoren zugrunde gelegt werden.

Eine Weiterbildung des erfindungsgemäßen Verfahrens sieht vor, dass bei Belegung eines Detektorbildpunktes eines Gesichtsfeldes mit einem Referenzsignal stets sämtliche Detektorbildpunkte dieses Gesichtsfeldes mit diesem Referenzsignal belegt werden. Auf diese Weise können Kalibriermessungen komfortabel gleichzeitig für sämtliche Detektorbildpunkte eines Gesichtsfeldes durchgeführt werden.

Eine Ausgestaltungsvariante des erfindungsgemäßen Verfahrens sieht vor, dass als Referenzsignal Schwarzkörperstrahlung eingesetzt wird, wobei verschiedene Referenzsignale durch Schwarzkörperstrahlung bei verschiedenen Temperaturen des Schwarzkörpers realisiert werden. Diese Vorgehensweise hat sich insbesondere bei Infrarotsensorsystemen bewährt.

Wie oben dargelegt wurde, kann dem Verfahren grundsätzlich ein Zusammenhang höherer Ordnung zwischen den in dem wenigstens einen einzelnen Detektorbildpunkt des ersten Gesichtsfelds gemessenen Grauwert und den Referenzsignalen in den entsprechenden Detektorbildpunkten der übrigen Gesichtsfelder zugrunde gelegt werden. Dies erhöht jedoch den Aufwand für Kalibriermessungen sowie für die Bestimmung der Überspruch- und Korrekturfaktoren und vor allem für die Korrektur der gemessenen Grauwerte. Eine Weiterbildung der Erfindung sieht daher vor, für verschiedene Intensitätsbereiche zu vermessender Strahlung gesonderte Überspruch- und Korrekturfaktoren zu bestimmen und bei der Korrektur gemessener Grauwerte der gemessenen Intensität entsprechende Korrekturfaktoren zu verwenden. Es werden also gleichsam Auswahltabellen für Korrekturfaktoren in Abhängigkeit der gemessenen Intensität zur Verfügung gestellt, sodass für den gemessenen Intensitätsbereich geeignete Korrekturfaktoren ausgewählt und zur Korrektur der gemessenen Grauwerte verwendet werden können. Durch diese abschnittsweise Linearisierung lässt sich bei einmalig erhöhtem Aufwand für die Bestimmung der Korrekturwerte und nur geringfügig erhöhtem Aufwand für die Korrektur gemessener Grauwerte eine verbesserte Reduktion des Übersprechens auch bei stark variierenden Intensitäten der zu vermessenden Strahlung realisieren.

Wird ein linearer Zusammenhang, oder ein zumindest abschnittsweise linearer Zusammenhang, der beschriebenen Art dem erfindungsgemäßen Verfahren zugrunde gelegt, so hat sich in der Praxis die Verwendung von Überspruchmatrizen bewährt. Eine Ausgestaltungsvariante der Erfindung sieht daher vor, dass die Überspruchfaktoren als Bestandteile einer Überspruchmatrix aufgefasst und die Korrekturfaktoren durch Bilden einer zu der Überspruchmatrix inversen Matrix bestimmt werden. Unter Verwendung dieser Matrizen gilt für den Zusammenhang zwischen den bei Kalibriermessungen gemessenen Grauwerten und den tatsächlich anliegenden Signalen

$$g = \kappa\, C\, s + o$$

**C** stellt hierin die Überspruchmatrix dar, $\kappa$ einen Kameraverstärkungsfaktor und **o** einen Offest-Vektor. **g** und **s** sind jeweils Vektoren, die zum einen die in den einander entsprechenden Detektorbildpunkten der i Gesichtsfelder gemessenen Grauwerte $g_i$, zum anderen die in diesen entsprechenden Detektorbildpunkten tatsächlich anliegenden Referenzsignale $s_i$ als Vektorelemente aufweisen. In einem idealen Sensorsystem ohne Übersprechen wären lediglich die Diagonalelemente der Überspruchmatrix **C** von Null verschieden. Sind die Matrixelemente $c_{ij}$ der Überspruchmatrix **C** bekannt, so bilden die Korrekturfaktoren die Matrixelemente $c'_{ij}$ der zu **C** inversen Matrix $C^{-1}$. Die korrigierten Grauwerte $b_i$ berechnen sich demzufolge aus den gemessenen Grauwerten $g_i$ gemäß

$$b = C^{-1}(g - g_0) + b\,(T_1)$$

wobei der Vektor **b** wiederum die korrigierten Grauwerte einander entsprechender Detektorbildelemente der verschiedenen i Gesichtsfelder als Vektorelemente enthält. $b\,(T_1)$ ist ein grundsätzlich beliebig wählbarer Offset-Vektor und $g_0$ somit gegeben durch $g_0 = g\,(T_1)$.

Wie oben dargelegt wurde, ermöglicht das erfindungsgemäße Verfahren eine Korrektur gemessener Grauwerte mit vergleichsweise geringem Rechenaufwand, insbesondere bei Zugrundelegung linearer Zusammenhänge. Eine bevorzugte Ausgestaltungsvariante des erfindungsgemäßen Verfahrens sieht daher vor, dass die Korrektur der gemessenen Grauwerte in Echtzeit durchgeführt wird.

Im Folgenden wird die Erfindung anhand von Figuren näher erläutert. Gleiche Elemente sind hierin, soweit zweckmäßig, mit gleichen Bezugszeichen versehen. Es zeigen:

Fig. 1    Vier aneinander angrenzende, disjunkte Gesichtsfelder gemäß dem Stand der Technik in schematischer Darstellung.

Fig. 2    Schematische Darstellung der auf einem Detektor überlagerten vier Gesichtsfelder aus Figur 1 gemäß dem Stand der Technik.

Fig. 3    Aus den auf einem Detektor überlagerten Gesichtsfeldern gemäß dem Stand der Technik gewonnene Einzelbilder mit Geisterbildern in Folge des Übersprechens in schematischer Darstellung.

Fig. 4    Schematische Illustration einander entsprechender Detektorbildpunkte in verschiedenen Gesichtsfeldern.

Fig. 5    Schematische Prinzipdarstellung des erfindungsgemäßen Verfahrens.

Fig. 6a    Referenzsignalbelegung der Gesichtsfelder bei einer Kalibriermessung gemäß einem bevorzugten Ausführungsbeispiel der Erfindung.

Fig. 6b    Matrixdarstellung des Zusammenhangs zwischen Grauwerten und Referenzsignalwerten bei der Referenzsignalbelegung aus Figur 6a.

Fig. 7a    Referenzsignalbelegung bei einer weiteren Kalibriermessung in dem ersten Ausführungsbeispiel der Erfindung.

Fig. 7b    Mathematischer Zusammenhang zwischen Grauwerten und Referenzsignalen bei der Signalbelegung gemäß Figur 7a.

Fig. 8    Differenzenbildung zur Berücksichtigung des systematischen Signalversatzes des Sensorsystems in den Überspruchfaktoren in dem Ausführungsbeispiel der Figuren 5a und 6a.

Fig. 9    Aus dem in Figur 8 dargestellten Zusammenhang folgendes Gleichungssystem zur Bestimmung eines Teils der Überspruchfaktoren.

Fig. 10    Erste Gleichung des Gleichungssystems aus Fig. 9 nach Umformung.

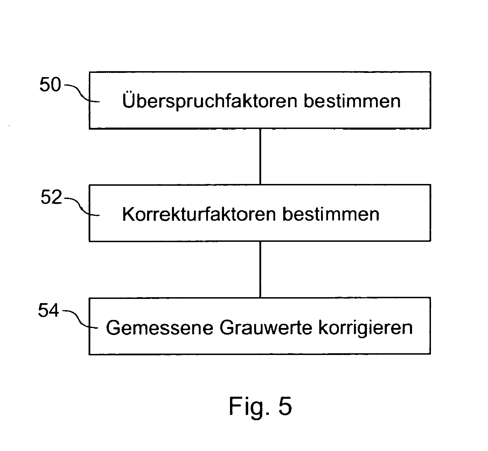

Figur 5 zeigt eine schematische Prinzipdarstellung des erfindungsgemäßen Verfahrens, wie dieses für einen einzelnen oder mehrere Detektorbildpunkte desjenigen Gesichtsfeldes durchzuführen ist, für welche Korrekturen durchgeführt werden sollen. Gemäß dieser Darstellung werden zunächst für wenigstens einen einzelnen Detektorbildpunkt eines ersten Gesichtsfeldes, beispielsweise den Detektorbildpunkt 20a des Gesichtsfeldes 1 aus Figur 4, Überspruchfaktoren bestimmt 52. Das erste Gesichtsfeld ist demnach jenes, für welches die Korrekturen durchgeführt werden sollen. Sollen Korrekturen für mehrere Gesichtsfelder durchgeführt werden, so kommt jedem dieser Gesichtsfelder die Rolle des ersten Gesichtsfeldes zu und es werden die jeweiligen Überspruchfaktoren bestimmt 52. Aus den jeweiligen Überspruchfaktoren werden zugehörige Korrekturfaktoren bestimmt 54. Im weiteren werden in den zu korrigierenden Gesichtsfeldern gemessene Grauwerte unter Verwendung der jeweils zugehörigen Korrekturwerte korrigiert 54. Hierdurch werden in den gemessenen Grauwerten enthaltene Grauwertanteile beseitigt, die nicht aus diesem zu korrigierenden Gesichtsfeld stammen, sondern durch Übersprechen aus entsprechenden Detektorbildpunkten der übrigen Gesichtsfelder in die gemessenen Grauwerte eingetragen wurden. Auf welche Weise Überspruch- und Korrekturfaktoren komfortabel und aufwandsgünstig bestimmt werden können wird nachfolgend anhand eines bevorzugten Ausführungsbeispiels erläutert.

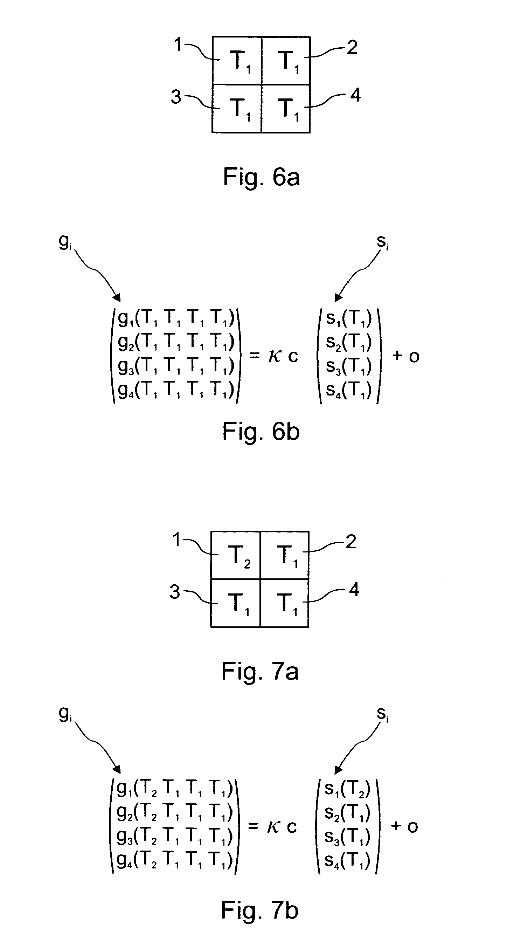

Figur 6a illustriert schematisch vier Gesichtsfelder 1, 2, 3, 4, welche in dem dargestellten, bevorzugten Ausführungsbeispiel des erfindungsgemäßen Verfahrens bei einer Kalibriermessung sämtlich mit einer Schwarzkörperstrahlung belegt werden, was durch die Temperatur $T_1$ schematisch angedeutet ist. Im Gesichtsfeld 1 stellt die Belegung mit Schwarzkörperstrahlung der Temperatur $T_1$ die Belegung mit einem ersten Referenzsignal dar. In den übrigen Gesichtsfeldern hingegen stellt die Belegung mit einer Schwarzkörperstrahlung der Temperatur $T_1$ die Belegung mit einem jeweiligen Basisreferenzsignal dar, wobei für die Gesichtfelder 2, 3 und 4 ein einheitliches Basisreferenzsignal gewählt ist.

Die Darstellung der Figur 6a gibt einen Referenzsignalbelegungszustand wieder, welcher zur Bestimmung der Überspruchfaktoren eines Detektorbildpunktes dienen kann, der in dem Gesichtsfeld 2, 3 oder 4 liegt. Dies illustriert die Gleichung in Figur 6b, nach welcher der Vektor **g** mit den die Vektorelemente bildenden Grauwerten $g_i$ sich berechnet mittels Multiplikation der Überspruchmatrix **C** mit dem Referenzsignalvektor **s**, der die Referenzsignale $s_i$ als Vektorelemente enthält. Die Kameraverstärkung wird durch den Verstärkungsfaktor $\kappa$ berücksichtigt. Der systematische Signalversatz des Sensorsystems wird durch den Offset-Vektor **o** repräsentiert. Die Gleichung aus Figur 6b gibt die angelegten Referenzsignale $s_i$ und die resultierten gemessenen Grauwerte $g_i$ bei der Kalibriermessung aus Figur 6a für einen Satz einander entsprechender Detektorbildpunkte wieder, beispielsweise für die Detektorbildpunkte 20a, 20b, 20c und 20d aus Figur 4. $g_1(T_1, T_1, T_1, T_1)$ wäre somit der im Detektorbildpunkt 20a gemessene Grauwert bei der in Figur 6a gezeigten Signalbelegung, $g_2(T_1, T_1, T_1, T_1)$ der in dem Detektorbildpunkt 20b gemessene Grauwert bei der Signalbelegung aus Figur 6a, $g_3(T_1, E_1, T_1, T_1)$ der in dem Detektorbildpunkt 20c gemessene Grauwert und entsprechend $g_4(T_1, T_1, T_1, T_1)$ der in dem Detektorbildpunkt 20d gemessene Grauwert. Dementsprechend ist $s_1(T_1)$ der am Detektorbildpunkt 20a anliegende Referenzsignalwert bei der Signalbelegung gemäß Figur 6a. Entsprechendes gilt für die Referenzsignale $s_2(T_1)$, $s_3(T_1)$ und $s_4(T_1)$. Würde die Kalibriermessung für die Detektorbildpunkte 22a, 22b, 22 c und 22d statt 20a, 20b, 20c und 20d durchgeführt werden, so hätten $g_1$ bis $g_4$ im Allgemeinen andere Werte. $s_1(T_1)$ bis $s_4(T_1)$ könnten grundsätzlich ebenso andere Werte aufweisen aufgrund von Inhomogenitäten in der Referenzsignalbelegung. Ist die Schwarzkörperstrahlung jedoch ideal homogen und reproduzierbar in allen Gesichtsfeldern dieselbe, so gilt $s_1(T_1) = s_2(T_1) = s_3(T_1) = s_4(T_1) = s(T_1)$.

Figur 7a zeigt schematisch die Referenzsignalbelegung bei einer weiteren Kalibriermessung. Die Gesichtsfelder 2, 3, 4 sind mit den gleichen Referenzsignalen belegt wie in Figur 6a. Das Gesichtsfeld 1, und somit alle Detektorbildpunkte dieses Gesichtsfeldes, sind hingegen mit einer Schwarzkörperstrahlung bei einer Temperatur $T_2$ belegt, welche sich von der Temperatur $T_1$ unterscheidet. Diesen Sachverhalt gibt die Gleichung in Figur 7b mathematisch wieder.

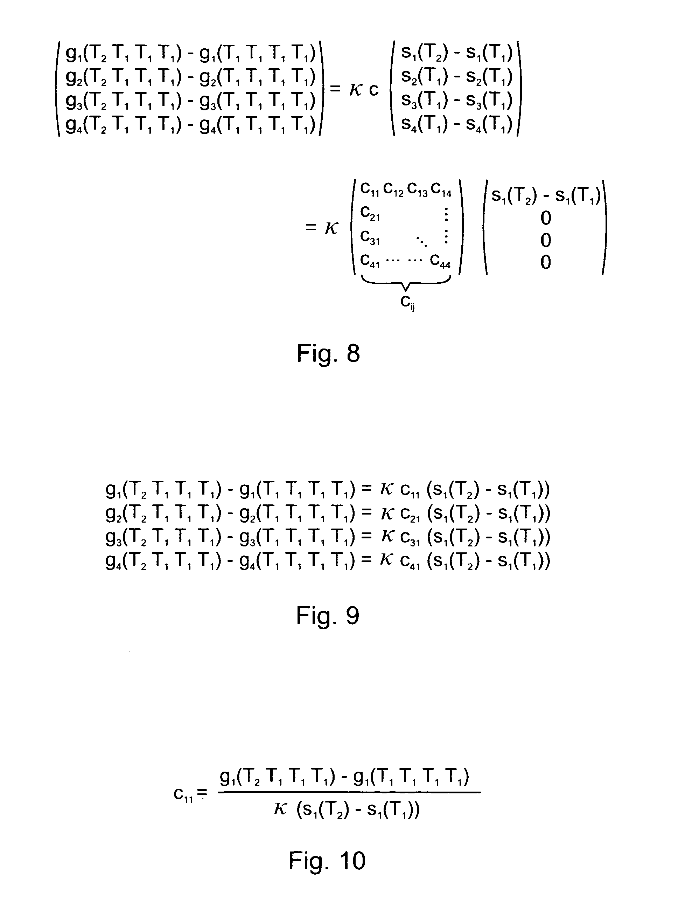

Um nun zu bestimmen, welchen Einfluss die Referenzsignaländerung im Gesichtsfeld 1 auf die in den anderen Gesichtsfeldern 2, 3, 4 gemessenen Grauwerte hat, werden die Gleichungen 5b und 6b voneinander subtrahiert. Dies illustriert Figur 8. Wie dieser entnommen werden kann, wurden zum einen die Offsetwerte **o** eliminiert, zum anderen ergibt sich für die Differenzen der Referenzsignale $s_1$ bis $s_4$ mehrfach ein Wert von Null. Die Überspruchsmatrix wird gebildet aus Überspruchfaktoren $c_{ij}$. Mit diesen Überspruchfaktoren $c_{ij}$ erhält man aus Figur 8 das in Figur 9 dargestellte Gleichungssystem. Mit den aus den Kalibriermessungen der Figuren 6a, 6b, 7a, 7b gewonnenen Messwerten lassen sich hieraus die Überspruchfaktoren $c_{11}$, $c_{21}$, $c_{31}$, $c_{41}$ bestimmen. Beispielsweise berechnet sich $c_{11}$ mit der in Fig. 10 dargestellten, zur ersten Gleichung der Fig. 9 äquivalenten Gleichung.

Zur Bestimmung der weiteren Überspruchfaktoren für diesen Satz einander entsprechender Detektorbildpunkte (beispielsweise 20a, 20b, 20c und 20d) sind drei weitere Kalibriermessungen erforderlich. Hierzu wird die in Figur 7a dargestellte Referenzsignalbelegung unter den Gesichtsfeldern durchgewechselt. Soll beispielsweise das Übersprechen der Gesichtsfelder 1, 3 und 4 in das Gesichtsfeld 2 kalibriert werden, so werden zwei weitere Messungen durchgeführt, in welchen in einem Fall das Gesichtsfeld 3 mit einer Schwarzkörperstrahlung der Temperatur $T_2$ belegt wird, im anderen Fall das Gesichtsfeld 4 mit einer Schwarzkörperstrahlung der Temperatur $T_2$ belegt wird. Das Gesichtsfeld 1 wird in beiden Fällen mit einer Schwarzkörperstrahlung der Temperatur $T_1$ belegt. In der Regel soll jedoch nicht nur in einem Gesichtsfeld, im beschriebenen Fall dem Gesichtsfeld 2, das Übersprechen korrigiert werden, sondern in allen Gesichtsfeldern. Es bietet sich daher an, eine weitere Kalibriermessung durchzuführen, bei welcher das Gesichtsfeld 2 mit einer Schwarzkörperstrahlung bei der Temperatur $T_2$ belegt wird, während die übrigen Gesichtsfelder mit dem Basisreferenzsignal, also einer Schwarzkörperstrahlung bei der Temperatur $T_1$, belegt sind. Auf diese Weise erhält man mit insgesamt 5 Kalibriermessungen sämtliche Matrixelemente $c_{ij}$, sodass das Übersprechen in jedem der Gesichtsfelder 1, 2, 3, 4 korrigiert werden kann. Die Bestimmung der Überspruchfaktoren $c_{ij}$ erfolgt für die weiteren Kalibriermessungen in einer zu den Figuren 7 und 8 analogen Weise.

Zu beachten ist, dass diese fünf Kalibriermessungen für jeden Satz einander entsprechender Detektorbildpunkte durchzuführen sind. Ein solcher Satz einander entsprechender Detektorbildpunkte ist beispielsweise gebildet durch die Detektorbildpunkte 20a, 20b, 20c und 20d in Figur 4. Es ergibt sich somit auch für jeden Satz einander entsprechender Detektorbildpunkte eine andere Überspruchmatrix **C**. Die Korrekturfaktoren sind die Matrixelemente der zu **C** inversen Matrix **C**$^{-1}$, sodass sich für jeden Satz einander entsprechender Detektorbildpunkte andere Korrekturfaktoren ergeben.

Die Korrektur der in einander entsprechenden Detektorbildpunkten gemessenen Grauwerte erfolgt durch Multiplikation des aus diesen gemessenen Grauwerten gebildeten Grauwertvektors mit der für diesen Satz einander entsprechender Detektorbildpunkte gültigen inversen Matrix **C**$^{-1}$ gemäß

$$\mathbf{b} = \mathbf{C}^{-1}\,(\mathbf{g} - \mathbf{g}_0) + \mathbf{b}\,(T_1).$$

Der einzelne korrigierte Grauwert eines Gesichtsfeldes ist dabei ein Vektorelement des so erhaltenen Bildvektors **b** (s. o.).

**Bezugszeichenliste**

| | |
|---|---|
| 1 | Gesichtsfeld 1 |
| 2 | Gesichtsfeld 2 |
| 3 | Gesichtsfeld 3 |
| 4 | Gesichtsfeld 4 |
| 6 | Übertragwerte Gesichtsfelder auf Detektor |
| 11 | Einzelbild von Gesichtsfeld 1 |
| 12 | Einzelbild von Gesichtsfeld 2 |
| 13 | Einzelbild von Gesichtsfeld 3 |
| 14 | Einzelbild von Gesichtsfeld 4 |
| 16 | Sonne aus Gesichtsfeld 1 |
| 17a | Geisterbild |
| 17b | Geisterbild |
| 18 | Baumkrone |
| 20a | einander entsprechende Detektorbildpunkte |
| 20b | einander entsprechende Detektorbildpunkte |
| 20c | einander entsprechende Detektorbildpunkte |
| 20d | einander entsprechende Detektorbildpunkte |
| 22a | einander entsprechende Detektorbildpunkte |
| 22b | einander entsprechende Detektorbildpunkte |
| 22c | einander entsprechende Detektorbildpunkte |
| 22d | einander entsprechende Detektorbildpunkte |
| 50 | Bestimmung Überspruchfaktoren |
| 52 | Bestimmung Korrekturfaktoren |
| 54 | Korrektur gemessener Grauwerte |
| | |
| $c_{ij}$ | Überspruchfaktoren |
| $g_i$ | Grauwerte |
| $s_i$ | Referenzsignale |
| $T_1$ | Schwarzkörperstrahlungstemperatur |
| $T_2$ | Schwarzkörperstrahlungstemperatur |

**Patentansprüche**

1. Verfahren zur Reduktion des Übersprechens bei einem Sensorsystem mit mehreren Gesichtsfeldern (1, 2, 3, 4) und einer Abbildungsvorrichtung, die mehrere Gesichtsfelder (1, 2, 3, 4) überlagert auf einen Detektor abbildet (6), aufweisend folgende Schritte:

   - für wenigstens einen einzelnen Detektorbildpunkt (20b) eines ersten Gesichtsfeldes (2) werden Überspruchfaktoren ($c_{ij}$) bestimmt (50), welche jeweils angeben, in welchem Maße die entsprechenden Detektorbildpunkte (20a, 20c, 20d) der übrigen Gesichtsfelder (1, 3, 4) in den wenigstens einen einzelnen Detektorbildpunkt (20b) des ersten Gesichtsfelds (2) übersprechen;
   - aus den Überspruchfaktoren ($c_{ij}$) werden Korrekturfaktoren bestimmt (52);
   - ein in dem wenigstens einen einzelnen Detektorbildpunkt (20b) des ersten Gesichtsfelds (2) gemessener Grauwert wird mit Hilfe der Korrekturfaktoren zumindest teilweise um in dem gemessenen Grauwert enthaltene Grauwertanteile korrigiert (54), welche durch Übersprechen aus den entsprechenden Detektorbildpunkten (20a, 20c, 20d) der übrigen Gesichtsfelder (1, 3, 4) in den gemessenen Grauwert eingetragen werden.

2. Verfahren nach Anspruch 1,
   **dadurch gekennzeichnet,**
   **dass** die gemessenen Grauwerte jedes einzelnen Detektorbildpunktes (20a, 20b, 20c, 20d, 22a, 22b, 22c, 22d) aller Gesichtsfelder (1, 2, 3, 4) unter Verwendung der Korrekturfaktoren korrigiert werden (54).

3. Verfahren nach einem der vorangegangenen Ansprüche,
   **dadurch gekennzeichnet,**
   **dass** für jeden einzelnen Detektorbildpunkt (20a, 20b, 20c, 20d, 22a, 22b, 22c, 22d) aller Gesichtsfelder (1, 2, 3, 4) die Überspruchfaktoren ($c_{ij}$) bestimmt werden (50).

4. Verfahren nach einem der vorangegangenen Ansprüche,
   **dadurch gekennzeichnet,**
   **dass** die Überspruchfaktoren ($c_{ij}$) für den wenigstens einen einzelnen Detektorbildpunkt (20b) des ersten Gesichtsfelds (2) bestimmt werden, indem die entsprechenden Detektorbildpunkte (20a, 20c, 20d) der übrigen Gesichtsfelder (1, 3, 4) mit Referenzsignalen ($s_1$, $s_3$, $s_4$) belegt werden und der Einfluss jedes Referenzsignals ($s_1$, $s_3$, $s_4$) auf den in dem einzelnen Detektorbildpunkt des ersten Gesichtsfelds gemessenen Grauwert ($g_2$) bestimmt wird.

5. Verfahren nach Anspruch 4,
   **dadurch gekennzeichnet,**
   **dass** zur Bestimmung (50) der Überspruchfaktoren ($c_{ij}$) für den wenigstens einen einzelnen Detektorbildpunkt (20b) des ersten Gesichtsfelds (2)

   - der entsprechende Detektorbildpunkt (20a) eines weiteren Gesichtsfeldes mit einem von Null verschiedenen Referenzsignal ($s_1$) belegt wird,
   - der eine einzelne Detektorbildpunkt (20b) des ersten Gesichtsfeldes (2) und die entsprechenden Detektorbildpunkte (20c, 20d) der übrigen weiteren Gesichtsfelder (3, 4) währenddessen mit einem Null-Referenzsignal belegt werden,
   - die beschriebene Referenzsignalbelegung unter den weiteren Gesichtsfeldern (1, 3, 4) derart durchgewechselt wird, dass der dem einzelnen Detektorbildpunkt (20b) des ersten Gesichtsfelds (2) entsprechende Detektorbildpunkt (20a, 20c, 20d) jedes weiteren Gesichtsfeldes (1, 3, 4) zumindest ein Mal mit dem von Null verschiedenen Referenzsignal belegt wird.

6. Verfahren nach einem der vorangegangenen Ansprüche,
   **dadurch gekennzeichnet,**
   **dass** ein systematischer Signalversatz (o) des Sensorsystems in den Überspruchfaktoren ($c_{ij}$) berücksichtigt wird und über die Korrekturfaktoren korrigiert wird (54).

7. Verfahren nach einem der Ansprüche 4 bis 6,
   **dadurch gekennzeichnet,**
   **dass** zur Bestimmung (50) der Überspruchfaktoren ($c_{ij}$) für den wenigstens einen einzelnen Detektorbildpunkt (20b) des ersten Gesichtsfelds (2)

   - der entsprechende Detektorbildpunkt (20a) eines weiteren Gesichtsfeldes (1) während einer ersten Zeitphase mit einem ersten Referenzsignal ($s_1(T_1)$) und während einer zweiten Zeitphase mit einem zweiten, von dem ersten Referenzsignal ($s_1(T_1)$) unterschiedlichen Referenzsignal ($s_1(T_2)$) belegt wird,
   - der eine einzelne Detektorbildpunkt (20b) des ersten Gesichtsfeldes (2) und die entsprechenden Detektorbildpunkte (20c, 20d) der übrigen weiteren Gesichtsfelder (3, 4) während beider Zeitphasen mit einem Basisreferenzsignal ($s_3(T_1)$, $s_4(T_1)$, $s_2(T_1)$) belegt werden, wobei bevorzugt für jedes weitere Gesichtsfeld (3, 4) dasselbe, einheitliche Basisreferenzsignal verwendet wird,
   - die beschriebene Referenzsignalbelegung unter den weiteren Gesichtsfeldern (1, 3, 4) derart durchgewechselt wird, dass der dem einzelnen Detektorbildpunkt (20b) des ersten Gesichtsfelds (2) entsprechende Detektorbildpunkt (20a, 20c, 20d) jedes weiteren Gesichtsfeldes (1, 3, 4) zumindest ein Mal mit dem ersten ($s_1(T_1)$) und zumindest ein Mal mit dem zweiten Referenzsignal ($s_1(T_2)$) belegt wird, wobei bevorzugt für jedes Gesichtsfeld das gleiche erste und das gleiche zweite Referenzsignal verwendet wird.

8. Verfahren nach Anspruch 7,
**dadurch gekennzeichnet,**
**dass**

    - für jedes Gesichtsfeld (1, 2, 3, 4) dasselbe, einheitliche Basisreferenzsignal verwendet wird,
    - für alle Gesichtsfelder ein einheitliches erstes Referenzsignal ($s_1(T_1)$, $s_2(T_1)$, $s_3(T_1)$, $s_4(T_1)$) verwendet wird, welches dem Basisreferenzsignal entspricht.

9. Verfahren nach Anspruch 4 bis 8,
**dadurch gekennzeichnet,**
**dass** bei Belegung eines Detektorbildpunktes (20a) eines Gesichtsfeldes (1) mit einem Referenzsignal ($s_1(T_1)$) stets sämtliche Detektorbildpunkte (20a, 22a) dieses Gesichtsfeldes mit diesem Referenzsignal ($s_1(T_1)$) belegt werden.

10. Verfahren nach Anspruch 4 bis 9,
**dadurch gekennzeichnet,**
**dass** als Referenzsignal ($s_1(T_1)$, $s_2(T_1)$, $s_3(T_1)$, $s_4(T_1)$, $s_1(T_2)$) Schwarzkörperstrahlung eingesetzt wird, wobei verschiedene Referenzsignale durch Schwarzkörperstrahlung bei verschiedenen Temperaturen ($T_1$, $T_2$) des Schwarzkörpers realisiert werden.

11. Verfahren nach einem der Ansprüche 4 bis 10,
**dadurch gekennzeichnet,**
**dass** zur Bestimmung der Überspruchfaktoren ($c_{ij}$) ein linearer Zusammenhang zwischen den in dem wenigstens einen einzelnen Detektorbildpunkt (20b) des ersten Gesichtsfelds (2) gemessenen Grauwert ($g_2$) und den Referenzsignalen ($s_1$, $s_3$, $s_4$) in den entsprechenden Detektorbildpunkten (20a, 20c, 20d) der übrigen Gesichtsfelder (1, 3, 4) zu Grunde gelegt wird.

12. Verfahren nach einem der vorangegangenen Ansprüche,
**dadurch gekennzeichnet,**
**dass** für verschiedene Intensitätsbereiche zu vermessender Strahlung gesonderte Überspruch- ($c_{ij}$) und Korrekturfaktoren bestimmt werden (50, 52) und bei der Korrektur (54) gemessener Grauwerte der gemessenen Intensität entsprechende Korrekturfaktoren verwendet werden.

13. Verfahren nach einem der vorangegangenen Ansprüche,
**dadurch gekennzeichnet,**
**dass** die Überspruchfaktoren ($c_{ij}$) als Bestandteile einer Überspruchmatrix aufgefasst und die Korrekturfakturen durch Bilden einer zu der Überspruchmatrix inversen Matrix bestimmt werden (52).

14. Verfahren nach einem der vorangegangenen Ansprüche,
**dadurch gekennzeichnet,**
**dass** die Korrektur (54) der gemessenen Grauwerte in Echtzeit durchgeführt wird.

Fig. 1
Stand der Technik

Fig. 2
Stand der Technik

Fig. 3
Stand der Technik

Fig. 4

50 — Überspruchfaktoren bestimmen

52 — Korrekturfaktoren bestimmen

54 — Gemessene Grauwerte korrigieren

Fig. 5

Fig. 6a

$g_i$          $s_i$

$$\begin{pmatrix} g_1(T_1, T_1, T_1, T_1) \\ g_2(T_1, T_1, T_1, T_1) \\ g_3(T_1, T_1, T_1, T_1) \\ g_4(T_1, T_1, T_1, T_1) \end{pmatrix} = \mathcal{K} \, c \begin{pmatrix} s_1(T_1) \\ s_2(T_1) \\ s_3(T_1) \\ s_4(T_1) \end{pmatrix} + o$$

Fig. 6b

Fig. 7a

$g_i$          $s_i$

$$\begin{pmatrix} g_1(T_2\, T_1, T_1, T_1) \\ g_2(T_2\, T_1, T_1, T_1) \\ g_3(T_2\, T_1, T_1, T_1) \\ g_4(T_2\, T_1, T_1, T_1) \end{pmatrix} = \mathcal{K} \, c \begin{pmatrix} s_1(T_2) \\ s_2(T_1) \\ s_3(T_1) \\ s_4(T_1) \end{pmatrix} + o$$

Fig. 7b

$$
\begin{pmatrix} g_1(T_2\,T_1\,T_1\,T_1) - g_1(T_1\,T_1\,T_1\,T_1) \\ g_2(T_2\,T_1\,T_1\,T_1) - g_2(T_1\,T_1\,T_1\,T_1) \\ g_3(T_2\,T_1\,T_1\,T_1) - g_3(T_1\,T_1\,T_1\,T_1) \\ g_4(T_2\,T_1\,T_1\,T_1) - g_4(T_1\,T_1\,T_1\,T_1) \end{pmatrix} = \mathcal{K}\,\mathbf{c} \begin{pmatrix} s_1(T_2) - s_1(T_1) \\ s_2(T_1) - s_2(T_1) \\ s_3(T_1) - s_3(T_1) \\ s_4(T_1) - s_4(T_1) \end{pmatrix}
$$

$$
= \mathcal{K} \underbrace{\begin{pmatrix} c_{11}\,c_{12}\,c_{13}\,c_{14} \\ c_{21} \qquad \vdots \\ c_{31} \qquad \ddots \quad \vdots \\ c_{41}\,\cdots\,\cdots\,c_{44} \end{pmatrix}}_{c_{ij}} \begin{pmatrix} s_1(T_2) - s_1(T_1) \\ 0 \\ 0 \\ 0 \end{pmatrix}
$$

## Fig. 8

$$
g_1(T_2\,T_1\,T_1\,T_1) - g_1(T_1\,T_1\,T_1\,T_1) = \mathcal{K}\,c_{11}\,(s_1(T_2) - s_1(T_1))
$$
$$
g_2(T_2\,T_1\,T_1\,T_1) - g_2(T_1\,T_1\,T_1\,T_1) = \mathcal{K}\,c_{21}\,(s_1(T_2) - s_1(T_1))
$$
$$
g_3(T_2\,T_1\,T_1\,T_1) - g_3(T_1\,T_1\,T_1\,T_1) = \mathcal{K}\,c_{31}\,(s_1(T_2) - s_1(T_1))
$$
$$
g_4(T_2\,T_1\,T_1\,T_1) - g_4(T_1\,T_1\,T_1\,T_1) = \mathcal{K}\,c_{41}\,(s_1(T_2) - s_1(T_1))
$$

## Fig. 9

$$
c_{11} = \frac{g_1(T_2\,T_1\,T_1\,T_1) - g_1(T_1\,T_1\,T_1\,T_1)}{\mathcal{K}\,(s_1(T_2) - s_1(T_1))}
$$

## Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0905539 B1